# EUROPÄISCHE PATENTSCHRIFT

(11) **EP 1 312 513 B1**
(45) Veröffentlichungstag und Bekanntmachung des Hinweises auf die Patenterteilung: **17.10.2007**
(21) Anmeldenummer: 02025803.4
(22) Anmeldetag: 18.11.2002
(51) Int. Cl.: B60R 19/24

(54) **Kraftfahrzeug-Stossfänger**
Vehicle bumper
Pare-chocs de véhicule automobile

(30) Priorität: 20.11.2001 DE 10156893
(43) Veröffentlichungstag der Anmeldung: 21.05.2003
(73) Patentinhaber: Plastal GmbH, 91781 Weissenburg (DE)
(72) Erfinder: Burkhardt, Steffen, 71083 Herrenberg (DE); Preissler, Dietmar, 91781 Hagenbuch (DE); Sautner, Anton, 91757 Treuchtlingen (DE)
(74) Vertreter: Scherzberg, Andreas Hans

(56) Entgegenhaltungen:
- EP-A- 0 343 546
- DE-A- 19 736 755
- FR-A- 2 634 703
- PATENT ABSTRACTS OF JAPAN vol. 2000, no. 15, 6. April 2001 (2001-04-06) & JP 2000 335336 A (KANTO AUTO WORKS LTD), 5. Dezember 2000 (2000-12-05)

## Beschreibung

Die Erfindung betrifft einen Kraftfahrzeug-Stoßfänger nach dem Oberbegriff des Anspruchs 1. Die Erfindung betrifft auch ein Kraftfahrzeug mit einem erfindungsgemäßen Stoßfänger.

Aus der französischen Offenlegungsschrift 26 34 703 A1 ist ein Kraftfahrzeug-Stoßfänger bekannt, bei dem Seitenteile eines Stoßfängeraußenteils mittels eines zweiteiligen Trägers mit einer Fahrzeugkarosserie verbunden sind. Der zweiteilige Träger weist zwei gegeneinander verschiebbare Elemente auf. Die zwei Elemente sind entlang einer zur Fahrzeuglängsrichtung schrägen Ebene verschiebbar. Bei einem Aufprall verschieben sich die Seitenteile des Stoßfängeraußenteils dadurch entlang einer schrägen Ebene nach vorne und von den Seitenteilen der Fahrzeugkarosserie weg.

Aus der deutschen Offenlegungsschrift 197 08 118 A1 ist ein Kraftfahrzeug-Stoßfänger bekannt, bei dem die Seitenteile des Stoßfängers lösbar an einer Kraftfahrzeugkarosserie befestigt sind. Die lösbare Verbindung kann als Klipsverbindung ausgeführt sein. Bei einem Aufprall löst sich die Verbindung der Seitenteile mit der Fahrzeugkarosserie und die Seitenteile können entlang einer am Stoßfänger vorgesehenen Schräge entlang der Fahrzeugkarosserie abgleiten.

FR 2 634 703 A1 beschreibt sämtliche Merkmale des Oberbegriffs des Anspruchs 1.

Gesetzliche Vorschriften in einigen Ländern verlangen, dass Kraftfahrzeug-Stoßfänger einen Aufprall eines Fahrzeugs mit geringer Geschwindigkeit auf ein Hindernis vollständig und ohne Beschädigung abfangen bzw. dass ein Fahrzeug noch fahrtüchtig bleibt und beispielsweise die Funktion des Heckklappenschlosses erhalten bleibt. Aus Designgründen sollen solche Stoßfänger aber als integraler Bestandteil des Fahrzeugs erscheinen. Bekannte lösbare Stoßfängerbefestigungen weisen die lösbare Verbindung zwischen Fahrzeugkarosserie und Stoßfänger auf und sind damit auf enge Toleranzen der Fahrzeugkarosserie angewiesen.

Mit der Erfindung soll ein Kraftfahrzeug-Stoßfänger geschaffen werden, der bei leichter Montierbarkeit eine Beschädigung der Fahrzeugkarosserie bei einem Aufprall mit geringer Geschwindigkeit verhindert.

Erfindungsgemäß ist hierzu ein Kraftfahrzeug-Stoßfänger mit einem an-einer Fahrzeugkarosserie befestigbaren Stoßfänger-Innenteil und einem wenigstens abschnittsweise an dem Stoßfänger-Innenteil befestigten Stoßfänger-Außenteil vorgesehen, bei dem das Stoßfänger-Innenteil einen an der Fahrzeugkarosserie befestigten Grundkörper und eine mittels einer lösbaren Verbindung am Grundkörper befestigte Halteleiste aufweist, an der eine Kante des Stoßfänger-Außenteils befestigt ist, wobei die Verbindung der Halteleiste an dem Grundkörper durch eine Krafteinwirkung auf das Stoßfänger-Außenteil in Längsrichtung des Kraftfahrzeugs und auf die Fahrzeugkarosserie zu lösbar ist.

Indem zur Befestigung der Kante des Stoßfänger-Außenteils eine Halteleiste vorgesehen ist, ist die lösbare Verbindung nicht von Toleranzen der Fahrzeugkarosserie abhängig. Darüber hinaus kann der komplette Stoßfänger einschließlich der lösbaren Verbindung als Einheit aus Stoßfänger-Innenteil und Stoßfänger-Außenteil an der Fahrzeugkarosserie befestigt werden. Besonders zweckmäßig ist das Vorsehen einer solchen lösbaren Verbindung im Bereich unterhalb einer Heckklappe oder eines Kofferraumdeckels eines Fahrzeugs. Da zwischen Stoßfänger und Fahrzeugkarosserie aus Designgründen kein sichtbarer Spalt bzw. ein möglichst kleiner Spalt vorhanden sein soll, besteht die Gefahr, dass eine Vorderkante des Stoßfänger-Außenteils auch bei einem leichten Aufprall die Fahrzeugkarosserie beaufschlagt und speziell den Bereich, in dem ein Schloss einer. Fahrzeugklappe angeordnet ist, verformt. Dadurch besteht die Gefahr, dass sich diese Klappe auch nach einem leichten Aufprall nicht mehr öffnen lässt. Indem sich die Halteleiste bei einem Fahrzeugaufprall vom Stoßfänger-Innenteil löst, erhält die Vorderkante des Stoßfänger-Außenteils Bewegungsfreiheit, so dass Beschädigungen der Fahrzeugkarosserie durch die Vorderkante des Stoßfänger-Außenteils verhindert werden können. Gegebenenfalls kann die Fahrzeugkarosserie geeignet gestaltet werden, um Bewegungsfreiheit für die Vorderkante zu schaffen.

Erfindungsgemäß ist die lösbare Verbindung als Rastverbindung ausgebildet.

Durch diese Maßnahme kann das Stoßfänger-Außenteil mit der Halteleiste nach einem Fahrzeugaufprall wieder in den Grundkörper des Stoßfänger-Innenteils eingerastet werden. Darüber hinaus kann der Kraftfahrzeug-Stoßfänger einfach zusammengebaut werden.

In Weiterbildung der Erfindung weist die Rastverbindung wenigstens ein in Fahrzeugquerrichtung verlaufendes stabförmiges inneres Element und wenigstens ein das stabförmige Element abschnittsweise umgreifendes äußeres Element auf.

Mittels eines stabförmigen Elements, das in Fahrzeugquerrichtung verläuft, kann eine gewisse Toleranz in Fahrzeugquerrichtung geschaffen werden, die einen Zusammenbau des Kraftfahrzeug-Stoßfängers erleichtert. Auch das Wiedereinrasten der Rastverbindung nach einem Aufprall wird dadurch erleichtert.

In Weiterbildung der Erfindung weist das stabförmige innere Element eine kreiszylinderabschnittförmige Außenfläche auf, die abschnittsweise einer Kreiszylindermantelfläche entspricht.

Auf diese Weise kann die Halteleiste eine Schwenkbewegung um eine Fahrzeugquerrichtung ausführen. Ein sehr leichter Aufprall, beispielsweise ein sogenannter Parkrempler, kann dadurch möglicherweise durch eine Schwenkbewegung der Halteleiste abgefangen werden und führt nicht zu einem Lösen der Rastverbindung. Im Hinblick auf eine Material- und Gewichtsersparnis kann das stabförmige innere Element in Fahrzeugquerrichtung einen U-förmigen Querschnitt aufweisen.

In Weiterbildung der Erfindung weist das äußere Element einen das stabförmige innere Element abschnittsweise umgreifenden Halteabschnitt sowie einen Führungsabschnitt auf, mittels dem beim Bewegen des äußeren Elements auf das innere Element zu das stabförmige Element in den Halteabschnitt eingeführt wird.

Durch diese Maßnahmen wird der Zusammenbau des Kraftfahrzeug-Stoßfängers sowie das Wiedereinrasten der Rastverbindung nach einem Aufprall erleichtert.

In Weiterbildung der Erfindung weist das äußere Element am Übergang zwischen Halteabschnitt und Führungsabschnitt eine Rastnase auf.

Trotz leichter Einführbarkeit des Halteabschnitts auf das stabförmige Element wird die Halteleiste im eingerasteten Zustand durch die Rastnase sicher am inneren Element gehalten.

In Weiterbildung der Erfindung ist das Stoßfänger-Außenteil in die mit dem Stoßfänger-Innenteil verbundene Position vorgespannt.

Durch diese Maßnahme kehrt das Außenteil dann, wenn es sich mit der Halteleiste vom Grundkörper des Innenteils bei einem Aufprall gelöst hat, selbsttätig in die Ausgangsposition zurück, wenn das Stoßfänger-Außenteil wieder frei ist, beispielsweise nach einem leichten Aufprall. Die Vorspannung des Stoßfänger-Außenteils in die mit dem Stoßfänger-Innenteil verbundene Position ist größer als eine zum Einrasten der Rastverbindung erforderliche Kraft.

In Weiterbildung der Erfindung weist das Stoßfänger-Innenteil eine Rippenstruktur auf.

Dadurch kann eine Material- und Gewichtseinsparung mit sehr hoher Steifigkeit verbunden werden.

In Weiterbildung der Erfindung verläuft das Stoßfänger-Innenteil ausgehend von ersten Befestigungsmitteln zur Befestigung an der Fahrzeugkarosserie in Richtung auf eine Ladekante des Stoßfänger-Außenteils zu im wesentlichen entlang der Fahrzeugkarosserie und weist unterhalb des Bereichs der Ladekante wenigstens einen balkonartigen Vorsprung auf, der sich in Fahrzeuglängsrichtung erstreckt.

Dadurch wird Raum für eine Verformung des Stoßfänger-Außenteils unterhalb des balkonartigen Vorsprungs geschaffen. Trotzdem wird mittels des balkonartigen Vorsprungs ein Ladekantenbereich stabilisiert. Mehrere, balkonartige Vorsprünge können in Fahrzeugquerrichtung nebeneinander angeordnet werden.

In Weiterbildung der Erfindung ist die Halteleiste als Klemmleiste ausgebildet und ist mit in Fahrzeuglängsrichtung verlaufenden und im wesentlichen senkrecht zur Fahrzeugquerrichtung angeordneten Klemmrippen versehen.

Mittels einer solchen Klemmleiste wird ein sicherer Klemmsitz der Kante des Stoßfänger-Außenteils in der Halteleiste erreicht. Gegenüber einer vollflächigen Rampe zum Einklemmen der Kante des Stoßfänger-Außenteils weisen Klemmrippen den Vorteil einer Materialersparnis sowie einer leichteren Anpassbarkeit in bezug auf Toleranzen auf.

Das der Erfindung zugrundeliegende Problem wird auch durch ein Kraftfahrzeug mit einem erfindungsgemäßen Stoßfänger gelöst, bei dem die Fahrzeugkarosserie in einem der Halteleiste zugewandten Bereich eine Abweisschräge für die Halteleiste aufweist.

Auf diese Weise kann bei einem Aufprall die vom Grundkörper gelöste Halteleiste und somit das Stoßfänger-Außenteil geführt werden. Beispielsweise verläuft die Abweisschräge im Falle einer Heckklappe nach vorne unten, so dass die Vorderkante des Stoßfänger-Außenteils bei einem Aufprall vom Klappenschlossbereich weggeführt wird. Durch die Abweisschräge wird für den gleichen Verformungsweg der Vorderkante weniger Bauraum benötigt, als wenn sich die Vorderkante ausschließlich in Fahrzeuglängsrichtung bewegen würde.

In Weiterbildung der Erfindung ist unterhalb des Stoßfänger-Innenteils ein Verformungskörper innerhalb des Stoßfänger-Außenteils angeordnet und an der Fahrzeugkarosserie befestigt.

Eine solche Aufteilung in Verformungskörper und Innenteil ermöglicht eine an die Funktion angepasste Materialauswahl. Beispielsweise kann das eine Haltefunktion ausübende Innenteil aus Kunststoff, der zur Energieaufnahme vorgesehene Verformungskörper aus Aluminium aufgebaut werden.

Weitere Merkmale und Vorteile der Erfindung ergeben sich aus den Ansprüchen und der folgenden Beschreibung bevorzugter Ausführungsformen der Erfindung im Zusammenhang mit den Zeichnungen. In den Zeichnungen zeigen:
- Fig. 1: eine abschnittsweise Schnittansicht eines erfindungsgemäßen Kraftfahrzeug-Stoßfängers gemäß einer ersten Ausführungsform,
- Fig. 2: eine perspektivische Ansicht des Innenteils des Kraftfahrzeug-Stoßfängers der Fig. 1,
- Fig. 3: eine weitere perspektivische Ansicht des Innenteils des Kraftfahrzeug-Stoßfängers der Fig. 1 und
- Fig. 4: eine abschnittsweise Schnittansicht einer weiteren Ausführungsform des erfindungsgemäßen Kraftfahrzeug-Stoßfängers.

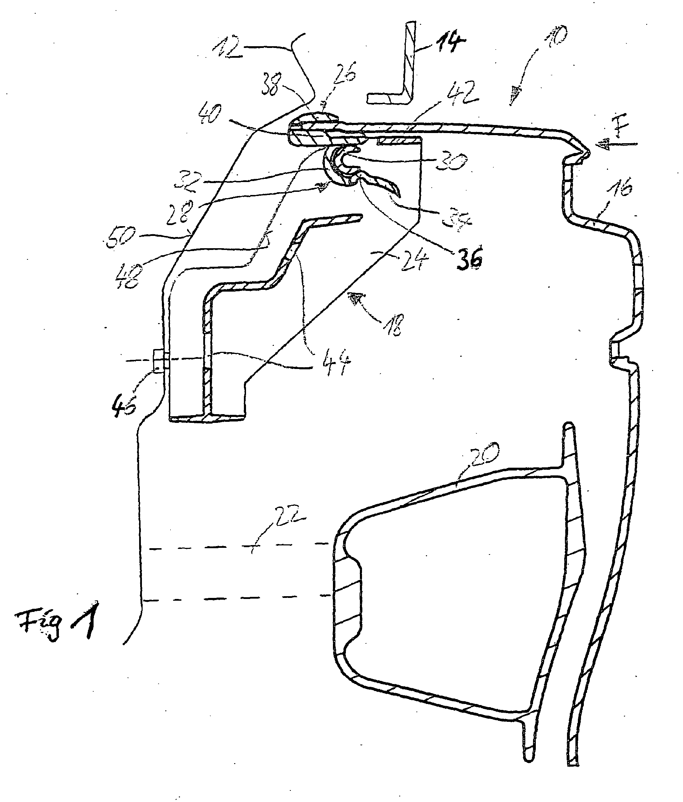

In der Darstellung der Fig. 1 ist ein erfindungsgemäßer Kraftfahrzeug-Stoßfänger 10 gemäß einer ersten bevorzugten Ausführungsform der Erfindung dargestellt. Der Kraftfahrzeug-Stoßfänger 10 ist als Heckstoßfänger ausgebildet und an einem Kraftfahrzeug angebracht, von dem lediglich ein Abschnitt einer Fahrzeugkarosserie 12 sowie ein Abschnitt einer Heckklappe 14 dargestellt sind. Der Stoßfänger 10 weist ein Stoßfänger-Außenteil 16 sowie ein Stoßfänger-Innenteil 18 auf. In einem Raum zwischen dem Stoßfänger-Außenteil 16 und der Fahrzeugkarosserie 12 ist unterhalb des Stoßfänger-Innenteils 18 ein Verformungskörper 20 angeordnet. Der Verformungskörper 20 ist mittels lediglich angedeuteter Träger 22 mit der Fahrzeugkarosserie 12 verbunden.

Das Stoßfänger-Innenteil 18 besteht aus einem Grundkörper 24 und einer Halteleiste 26. Die Halteleiste 26 ist mittels einer Rastverbindung lösbar an dem Grundkörper 24 befestigt. Die Rastverbindung wird durch ein einstückig an der Halteleiste 26 ausgebildetes äußeres Element 28 und ein einstückig mit dem Grundkörper 24 verbundenes inneres Element 30 gebildet. Sowohl die Halteleiste 26 als auch der Grundkörper 24 bestehen aus Kunststoffspritzguss. Das innere Elemente 30 ist stabförmig ausgebildet und weist eine Außenfläche auf, die einem Abschnitt einer Mantelfläche eines Kreiszylinders entspricht. Zur Gewichts- und Materialeinsparung hat das innere Element 30 einen U-förmigen Querschnitt. Auf die kreiszylinderförmige Mantelfläche aufgeklipst ist ein Halteabschnitt 32 des äußeren Elements 28, der das innere Element 30 abschnittsweise umgreift. An den Halteabschnitt 32 schließt sich ein Führungsabschnitt 34 an, der entgegen dem Halteabschnitt 32 gekrümmt ist. Der Führungsabschnitt 34 dient dazu, das innere Element 30 beim Aufschieben der Halteleiste 26 in den Halteabschnitt 32 einzuführen. Zwischen Halteabschnitt 32 und Führungsabschnitt 34 ist eine Rastnase 36 ausgebildet. Im dargestellten eingerasteten Zustand hält die Rastnase 36 die Halteleiste 26 an dem Grundkörper 24.

Die Halteleiste 26 klemmt eine Vorderkante des Stoßfänger-Außenteils 16 in einer parallel zur Fahrzeugrichtung verlaufenden Ausnehmung ein, die auf der einen Seite durch einen leistenförmigen Vorsprung 38 und auf der anderen Seite durch Klemmrippen 40 definiert ist. Auf diese Weise wird die Vorderkante des Stoßfänger-Außenteils 16 sicher in der Halteleiste 26 eingeklemmt.

Unterhalb der Heckklappe 14 befindet sich ein Ladekantenbereich des Stoßfänger-Außenteils 16. Um diesen Ladekantenbereich zu stabilisieren, weist der Grundkörper 24 des Stoßfänger-Innenteils 18 einen balkonartigen Vorsprung 42 auf, der sich unterhalb des Stoßfänger-Außenteils 16 im Bereich der Ladekante erstreckt und dadurch das Stoßfänger-Außenteil stabilisiert. Der Grundkörper 24 weist eine Rippenstruktur auf, die für eine Material- und Gewichtsersparnis mit Ausnehmungen 44 versehen ist. Eine Befestigung des Grundkörpers 24 an der Fahrzeugkarosserie 12 erfolgt mittels Befestigungsbolzen 46, die in der Fig. 1 lediglich schematisch angedeutet sind.

Im Falle eines leichten Heckaufpralls wirkt eine Kraft auf das Stoßfänger-Außenteil 16, die in der Fig. 1 mittels eines Pfeils F angedeutet ist. Die Kraft F wirkt in Längsrichtung des Fahrzeugs und auf die Fahrzeugkarosserie 12 zu. Durch die Einwirkung der Kraft F auf das Stoßfänger-Außenteil 16 löst sich die Rastverbindung zwischen dem äußeren Element 28 der Halteleiste 26 und dem inneren Element 30 des Grundkörpers 24. Infolgedessen kann sich die Vorderkante des Stoßfänger-Außenteils 16 in Richtung auf die Fahrzeugkarosserie 12 zu bewegen. An der Fahrzeugkarosserie 12 ist eine Abweisschräge 50 ausgebildet, die dazu führt, dass die Halteleiste 26 mit der Vorderkante des Stoßfänger-Außenteils 16 nach vorne unten, in der Darstellung der Fig. 1 nach unten links, abgelenkt wird. Um diese Ablenkbewegung der Halteleiste 26 zu ermöglichen, ist der Grundkörper 24 des Stoßfänger-Innenteils 18 so ausgebildet, dass zwischen einer Vorderseite 48 des Grundkörpers 24 und der Abweisschräge 50 der Fahrzeugkarosserie 12 ein Raum verbleibt, der groß genug ist, einen Abschnitt der Halteleiste 26 mit dem darin eingeklemmten Abschnitt des Stoßfänger-Außenteils 16 aufzunehmen. Durch die ausknöpfbare Halteleiste 26 und die Abweisschräge 50 wird die Vorderkante des Stoßfänger-Außenteils 16 nach vorne unten abgelenkt, so dass sie im Falle eines Aufpralls die Fahrzeugkarosserie 12 nicht beschädigen kann. Insbesondere wird die Vorderkante des Stoßfänger-Außenteils 16 von. einem Bereich der Fahrzeugkarosserie 12 abgeleitet, indem sich normalerweise ein Heckkläppenschloss für die Heckklappe 14 befindet. Dadurch wird vermieden, dass sich auch nach einem nur leichten Aufprall die Heckklappe 14 nicht mehr öffnen lässt.

Das Stoßfänger-Außenteil 16 ist neben der Befestigung am Stoßfänger-Innenteil 18 mittels weiterer Elemente so mit der Fahrzeugkarosserie verbunden und weist eine Elastizität auf, dass das Stoßfänger-Außenteil in die in der Fig. 1 dargestellten Lage mit in den Grundkörper 24 eingerasteter Halteleiste 26 vorgespannt ist. Löst sich daher bei einem Aufprall durch Einwirkung der Kraft F die Halteleiste 26 vom Grundkörper 24 und bewegt sich zusammen mit dem Ladekantenbereich des Stoßfänger-Außenteils 16 in den Raum zwischen dem Grundkörper 24 und der Abweisschräge 50 der Fahrzeugkarosserie 12, wird die Halteleiste 26 durch die Vorspannung des Stoßfänger-Außenteils 16 nach Wegfall der Kraft F wieder in die in der Fig. 1 dargestellte Ausgangsstellung zurückbewegt. Die Vorspannung des Stoßfänger-Außenteils 16 ist dabei größer als eine zum Einrasten der Halteleiste 26 in den Grundkörper 24 erforderliche Kraft. Nach einem Aufprall kehrt das Stoßfänger-Außenteil damit selbsttätig in die Ausgangsstellung zurück.

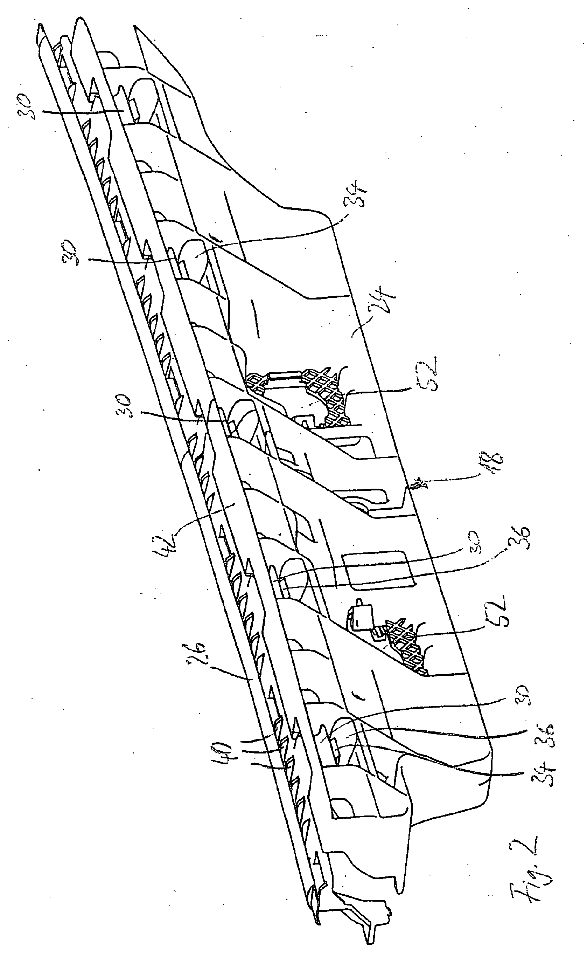

Die perspektivische Ansicht der Fig. 2 zeigt das Stoßfänger-Innenteil 18 von schräg hinten, d.h. von der Seite aus, von der die Vorderkante des Stoßfänger-Außenteils in die Halteleiste 26 eingeschoben wird. In der Darstellung der Fig. 2 gut zu erkennen, ist die rippenförmige Struktur des Grundkörpers 24 des Stoßfänger-Innenteils 18. Dadurch wird eine hohe Steifigkeit des Grundkörpers 24 erreicht. In der Fig. 2 erkennbare Ausnehmungen 52 sind für die Anordnung von Befestigungsbolzen zur Befestigung des Stoßfänger-Innenteils.18 an der Fahrzeugkarosserie 12 vorgesehen.

Ebenfalls zu erkennen sind insgesamt fünf stabförmige innere Elemente 30 des Grundkörpers 24, die jeweils von einem Halteabschnitt 32 der Halteleiste 26 umgriffen werden. Der Halteabschnitt 32 ist in der Fig. 2 nicht zu erkennen. Zu erkennen sind dagegen die jeweiligen Führungsabschnitte 34 sowie die jeweiligen Rastnasen 36 der äußeren Elemente 28 der Rastverbindung zwischen Halteleiste 26 und Grundkörper 24.

Die Halteleiste 26 weist zum Einklemmen der Vorderkante des Stoßfänger-Außenteils die Klemmrippen 40 auf, die parallel zueinander und nebeneinander angeordnet sind. Da die Halteleiste 26 an dem Grundkörper 24 um eine Fahrzeugquerrichtung verschwenkbar angeordnet ist, weist der Grundkörper 24 zur Stabilisierung des Stoßfänger-Außenteils im Bereich der Ladekante den balkonartigen Vorsprung 42 auf. Dieser balkonartige Vorsprung 42 erstreckt sich im wesentlichen über die gesamte Breite des Stoßfänger-Innenteils 18.

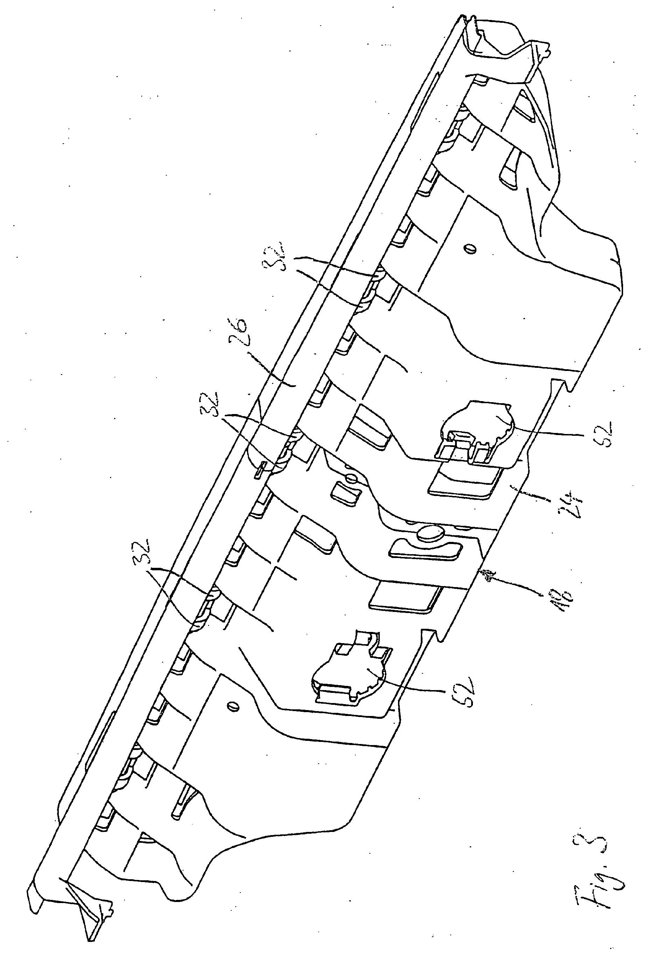

In der perspektivischen Ansicht der Fig. 3 ist das Stoßfänger-Innenteil 18 von vorne gezeigt, d.h. sichtbar ist eine Seite des Stoßfänger-Innenteils 18, die im eingebauten Zustand einer Fahrzeugkarosserie zugewandt ist. In dieser Ansicht sind nun die jeweiligen Halteabschnitte 32 der äußeren Elemente der Rastverbindung zwischen Halteleiste 26 und Grundkörper 24 zu erkennen. Die Halteabschnitte 32 bestehen jeweils aus zwei parallel zueinander verlaufenden und in Fahrzeugquerrichtung voneinander beabstandeten Materialstreifen, die kreisabschnittsförmig gebogen sind. Die zwei parallel zueinander verlaufenden Materialstreifen definieren zwischen sich eine Ausnehmung. Indem anstelle von Vollmaterial der Halteabschnitt aus zwei parallelen Materialstreifen ausgebildet wird, kann einerseits Gewicht eingespart werden, andererseits kann eine Federwirkung des Halteabschnitts durch Veränderung der Breite der Materialstreifen abgestimmt werden.

Wie aus den Darstellungen der Fig. 1 und der Fig. 3 zu entnehmen ist, verläuft der Grundkörper 24 ausgehend von den in den Ausnehmungen 52 angeordneten Befestigungsmitteln zur Befestigung an der Fahrzeugkarosserie zunächst entlang der Fahrzeugkarosserie um dann zunächst von dieser weg und schließlich parallel zur Fahrzeugkarosserie und im Abstand zu dieser zu verlaufen. Wie ausgeführt wurde, wird dadurch ein Raum zwischen Grundkörper 24 und Fahrzeugkarosserie geschaffen, in den sich die Halteleiste 26 im Falle eines Aufpralls zusammen mit einem Abschnitt des Stoßfänger-Außenteils hineinbewegen kann.

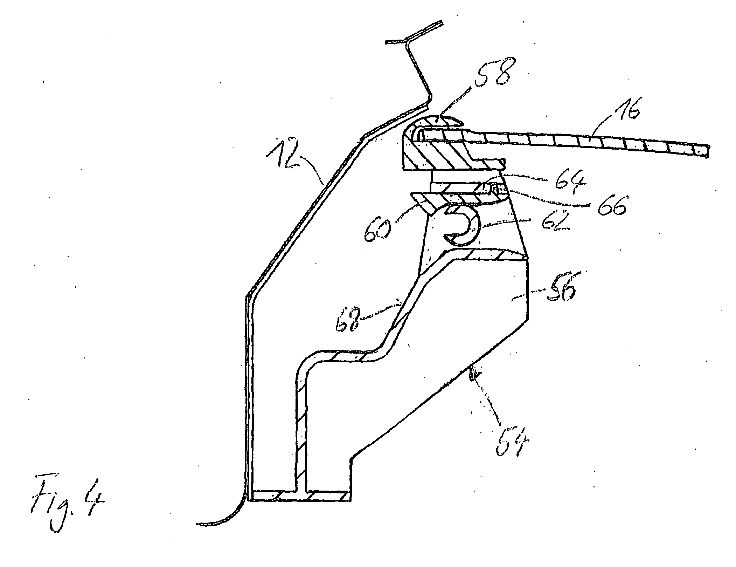

In der abschnittsweisen Schnittansicht der Fig. 4 ist eine weitere Ausführungsform des erfindungsgemäßen Kraftfahrzeug-Stoßfängers dargestellt. Die in Fig. 4 dargestellte Ausführungsform unterscheidet sich von der in den Fig. 1 bis 3 gezeigten Ausführungsform durch die Gestaltung eines Stoßfänger-Innenteils 54. Das Stoßfänger-Innenteil 54 besteht aus einem Grundkörper 56 und einer Halteleiste 58, in die eine Vorderkante des Stoßfänger-Außenteils 16 eingeklemmt ist. Die Halteleiste 58 ist mittels einer Rastverbindung mit dem Grundkörper 56 verbunden. Die Rastverbindung wird auf Seiten der Halteleiste 58 durch ein Element 60 gebildet, das zwischen ein stabförmiges Element 62 und ein leistenförmiges Element 64 des Grundkörpers 56 eingeklemmt wird. Das Element 60 der Halteleiste 58 weist eine Rastnase 66 auf, die in eine passende Ausnehmung des leistenförmigen Elements 64 eingreift. Das Element 60 ist dabei keilförmig ausgebildet, um das Einführen zwischen das stabförmige Element 62 und das leistenartige Element 64 zu erleichtern. Zwischen einer der Fahrzeugkarosserie 12 zugewandten Seite 68 des Grundkörpers 56 und der Fahrzeugkarosserie 12 ist ein Raum gebildet, in den die Halteleiste 58 im Falle eines Aufpralls zusammen mit einem Abschnitt des Stoßfänger-Außenteils 16 einlaufen kann.

## Patentansprüche

1. Kraftfahrzeug-Stoßfänger mit einem an einer Fahrzeugkarosserie (12) befestigbaren Stoßfänger-Innenteil (18; 54) und einem wenigstens abschnittsweise an dem Stoßfänger-Innenteil (18; 54) befestigten Stoßfänger-Außenteil (16), wobei das Stoßfänger-Innenteil (18; 54) einen an der Fahrzeugkarosserie (12) befestigten Grundkörper (24; 56) und eine mittels einer lösbaren Verbindung am Grundkörper (24; 56) befestigte Halteleiste (26; 58) aufweist, an der eine Kante des Stoßfänger-Außenteils (16) befestigt ist, und die Verbindung der Halteleiste (26; 58) an dem Grundkörper (24; 56) durch eine Krafteinwirkung auf das Stoßfänger-Außenteil (16) lösbar ist, wobei die Verbindung der Halteleiste (26; 58) an dem Grundkörper (24; 56) durch eine Krafteinwirkung auf das Stoßfänger-Außenteil (16) in Längsrichtung des Kraftfahrzeugs und auf die Fahrzeugkarosserie (12) zu lösbar ist und die Halteleiste (26; 58) als Klemmleiste ausgebildet ist, **dadurch gekennzeichnet, dass** die lösbare Verbindung als Rastverbindung ausgebildet: ist.

2. Kraftfahrzeug-Stoßfänger nach Anspruch 1,
**dadurch gekennzeichnet, dass** die Rastverbindung wenigstens ein in Fahrzeugquerrichtung verlaufendes stabförmiges inneres Element (30) und wenigstens ein das stabförmige Element (30) abschnittsweise umgreifendes äußeres Element (28) aufweist.

3. Kraftfahrzeug-Stoßfänger nach Anspruch 2,
**dadurch gekennzeichnet, dass** das stabförmige innere Element (30) eine Außenfäche aufweist, die abschnittsweise einer Kreiszylindermantelfläche entspricht.

4. Kraftfahrzeug-Stoßfänger nach Anspruch 2 oder 3,
**dadurch gekennzeichnet, dass** das äußere Element (28) einen das stabförmige innere Element (30) abschnittsweise umgreifenden Halteabschnitt (32) sowie einen Führungsabschnitt (34) aufweist, mittels dem beim Bewegen des äußeren Elements (28) auf das innere Element (30) zu das stabförmige Element (30) in den Halteabschnitt (32) eingeführt wird.

5. Kraftfahrzeug-Stoßfänger nach einem der vorstehenden Ansprüche,
**dadurch gekennzeichnet, dass** das äußere Element (28) am Übergang zwischen Halteabschnitt (32) und Führungsabschnitt (34) eine Rastnase (36) aufweist.

6. Kraftfahrzeug-Stoßfänger nach einem der vorstehenden Ansprüche,
**dadurch gekennzeichnet, dass** das Stoßfänger-Außenteil (16) in die mit dem Stoßfänger-Innenteil (18) verbundene Position vorgespannt ist.

7. Kraftfahrzeug-Stoßfänger nach einem der vorstehenden Ansprüche,
**dadurch gekennzeichnet, dass** das Stoßfänger-Innenteil (18) eine Rippenstruktur aufweist.

8. Kraftfahrzeug-Stoßfänger nach einem der vorstehenden Ansprüche,
**dadurch gekennzeichnet, dass** das Stoßfänger-Innenteil (18) unterhalb eines Bereichs einer Ladekante wenigstens einen balkonartigen Vorsprung (42) aufweist.

9. Kraftfahrzeug-Stoßfänger nach einem der vorstehenden Ansprüche,
**dadurch gekennzeichnet, dass** die Klemmleiste (26; 58) mit in Fahrzeuglängsrichtung verlaufenden und im wesentlichen senkrecht zur Fahrzeugquerrichtung angeordneten Klemmrippen (40) versehen ist.

10. Kraftfahrzeug mit Stoßfänger nach einem der vorstehenden Ansprüche,
**dadurch gekennzeichnet, dass** die Fahrzeugkarosserie (12) in einem der Halteleiste (26; 58) zugewandten Bereich eine Abweisschräge (50) für die Halteleiste (26; 58) aufweist.

11. Kraftfahrzeug nach Anspruch 10,
**dadurch gekennzeichnet, dass** zwischen dem Grundkörper (24) des Stoßfänger-Innenteils (18) und der Abweisschräge (50) der Fahrzeugkarosserie (12) ein Raum gebildet ist, in den die Halteleiste (26) mit einem Abschnitt des Stoßfänger-Außenteils (16) hineinbewegt werden kann.

12. Kraftfahrzeug nach Anspruch 10 oder 11,
**dadurch gekennzeichnet, dass** unterhalb des Stoßfänger-Innenteils (18) ein Verformungskörper (20) innerhalb des Stoßfänger-Außenteils (16) angeordnet und an der Fahrzeugkarosserie (12) befestigt ist.

## Claims

1. A motor-vehicle bumper having a bumper inner portion (18; 54), which can be secured to a vehicle body (12), and a bumper outer portion (16), which is secured at least in sections to the bumper inner portion (18; 54), with the bumper inner portion (18; 54) having a base body (24; 56), which is secured to the vehicle body (12), and a holding strip (26; 58) which is secured to the base body (24; 56) by means of a releasable connection and to which an edge of the bumper outer portion (16) is secured, and the connection of the holding strip (26; 58) on the base body (24; 56) being releasable by means of an action of force on the bumper outer portion (16), with the connection of the holding strip (26; 58) to the base body (24; 56) being releasable by means of an action of force on the bumper outer portion (16) in the longitudinal direction of the motor vehicle and towards the vehicle body (12), and the holding strip (26; 58) being formed as a clamping strip, **characterised in that** the releasable connection is formed as a latching connection.

2. A motor-vehicle bumper according to claim 1, **characterised in that** the latching connection has at least one bar-shaped inner element (30) extending in the transverse direction of the vehicle and at least one outer element (28) embracing the bar-shaped element (30) in sections.

3. A motor-vehicle bumper according to claim 2, **characterised in that** the bar-shaped inner element (30) has an outer surface that corresponds in sections to a circular cylinder lateral surface.

4. A motor-vehicle bumper according to claim 2 or 3, **characterised in that** the outer element (28) has a holding section (32) that embraces the bar-shaped inner element (30) in sections and also a guiding section (34) by means of which in the event of the movement of the outer element (28) towards the inner element (30) the bar-shaped element (30) is introduced into the holding section (32).

5. A motor-vehicle bumper according to one of the preceding claims, **characterised in that** the outer element (28) has a latching lug (36) at the transition between the holding section (32) and the guiding section (34).

6. A motor-vehicle bumper according to one of the preceding claims, **characterised in that** the bumper outer portion (16) is pre-tensioned into the position connected with the bumper inner portion (18).

7. A motor-vehicle bumper according to one of the preceding claims, **characterised in that** the bumper inner portion (18) has a ribbed structure.

8. A motor-vehicle bumper according to one of the preceding claims, **characterised in that** the bumper inner portion (18) has at least one balcony-like projection (42) below a region of a loading edge.

9. A motor-vehicle bumper according to one of the preceding claims, **characterised in that** the clamping strip (26; 58) is provided with clamping ribs (40) which extend in the longitudinal direction of the vehicle and are arranged substantially perpendicularly to the transverse direction of the vehicle.

10. A motor vehicle having a bumper according to one of the preceding claims, **characterised in that** the vehicle body (12) has a deflector slope (50) for the holding strip (26; 58) in a region facing the holding strip (26; 58).

11. A motor vehicle according to claim 10, **characterised in that** formed between the base body (24) of the bumper inner portion (18) and the deflector slope (50) of the vehicle body (12) there is a space into which the holding strip (26) can be moved with a section of the bumper outer portion (16).

12. A motor vehicle according to claim 10 or 11, **characterised in that** below the bumper inner portion (18) a deformation body (20) is arranged inside the bumper outer portion (16) and is secured to the vehicle body (12).

## Revendications

1. Pare-chocs de véhicule automobile comportant une partie de pare-chocs intérieure (18; 54) qui peut être fixée à une carrosserie de véhicule automobile (12) et une partie de pare-chocs extérieure (16) qui est fixée au moins par endroits à la partie de pare-chocs intérieure (18; 54), la partie de pare-chocs intérieure (18; 54) présentant un corps de base (24; 56) fixé à la carrosserie de véhicule automobile (12) et une baguette de retenue (26; 58) qui est fixée au corps de base (24; 56) à l'aide d'une liaison démontable et à laquelle est fixé un bord de la partie de pare-chocs extérieure (16), la fixation de la baguette de retenue (26; 58) au corps de base (24; 56) pouvant être libérée par une force exercée sur la partie de pare-chocs extérieure (16), la fixation de la baguette de retenue (26; 58) au corps de base (24; 56) pouvant être libérée par une force exercée sur la partie de pare-chocs extérieure (16) dans la direction longitudinale du véhicule automobile (12) et en direction de la carrosserie de véhicule automobile (12), et la baguette de retenue (26; 58) étant conformée en baguette à serrage, **caractérisé par le fait que** la liaison démontable est conformée en liaison à encliquetage.

2. Pare-chocs de véhicule automobile selon la revendication 1, **caractérisé par le fait que** la liaison à encliquetage comporte au moins un élément intérieur (30) en forme de barre qui s'étend dans la direction transversale du véhicule et au moins un élément extérieur (28) qui entoure par endroits l'élément en forme de barre (30).

3. Pare-chocs de véhicule automobile selon la revendication 2, **caractérisé par le fait que** l'élément intérieur (30) en forme de barre présente une surface extérieure dont la forme par endroits correspond à une enveloppe de cylindre circulaire.

4. Pare-chocs de véhicule automobile selon la revendication 2 ou 3, **caractérisé par le fait que** l'élément extérieur (28) comporte une portion de retenue (32) qui entoure par endroits l'élément intérieur (30) en forme de barre ainsi qu'une portion de guidage (34) grâce à laquelle, lors du déplacement de l'élément extérieur (28) en direction de l'élément intérieur (30), l'élément (30) en forme de barre est introduit dans la portion de retenue (32).

5. Pare-chocs de véhicule automobile selon une des revendications précédentes, **caractérisé par le fait que** l'élément extérieur (28) présente un bec d'encliquetage (36) au niveau du raccordement entre la portion de retenue (32) et la portion de guidage (34).

6. Pare-chocs de véhicule automobile selon une des revendications précédentes, **caractérisé par le fait que** la partie de pare-chocs extérieure (16), dans sa position liée à la partie de pare-chocs intérieure (18), est précontrainte.

7. Pare-chocs de véhicule automobile selon une des revendications précédentes, **caractérisé par le fait que** la partie de pare-chocs intérieure (18) présente une structure à nervures.

8. Pare-chocs de véhicule automobile selon une des revendications précédentes, **caractérisé par le fait que** la partie de pare-chocs intérieure (18), sous une portion d'un bord de chargement présente au moins une saillie en forme de balcon.

9. Pare-chocs de véhicule automobile selon une des revendications précédentes, **caractérisé par le fait que** la baguette de retenue (26; 58) est pourvue de nervures de serrage (40) qui s'étendent dans la direction longitudinale du véhicule et sont disposées essentiellement perpendiculairement à la direction transversale du véhicule.

10. Véhicule automobile équipé de pare-chocs de véhicule automobile selon une des revendications précédentes, **caractérisé par le fait que** la carrosserie de véhicule (12), dans une zone tournée vers la baguette de retenue (26, 58), présente une surface inclinée (50) rentrante pour la baguette de retenue (26; 58).

11. Véhicule automobile selon la revendication 10, **caractérisé par le fait qu'**entre le corps de base (24) de la partie de pare-chocs intérieure (18) et la surface inclinée rentrante (50) de la carrosserie est formé un espace à l'intérieur duquel la baguette de retenue (26) et une portion de la partie de pare-chocs extérieure (16) peuvent se déplacer.

12. Véhicule automobile selon la revendication 10 ou 11, **caractérisé par le fait qu'**au-dessous de la partie de pare-chocs intérieure (18) un corps déformable (20) est disposé à l'intérieur de la partie de pare-chocs extérieure (16) et est fixé à la carrosserie de véhicule (12).
